Europäisches Patentamt

European Patent Office

Office européen des brevets

(11) Veröffentlichungsnummer: **0 269 047**
**A1**

## (12) EUROPÄISCHE PATENTANMELDUNG

(21) Anmeldenummer: 87117214.4

(22) Anmeldetag: 23.11.87

(51) Int. Cl.4 **H01M 8/24 , H01M 8/02 , H01M 4/94 , H01M 2/14**

(30) Priorität: 25.11.86 DE 3640206

(43) Veröffentlichungstag der Anmeldung:
01.06.88 Patentblatt 88/22

(84) Benannte Vertragsstaaten:
AT BE CH DE FR GB LI NL SE

(71) Anmelder: BASF Aktiengesellschaft
Carl-Bosch-Strasse 38
D-6700 Ludwigshafen(DE)

(72) Erfinder: Sterzel, Hans-Josef, Dr.
Wasgauring 3
D-6701 Dannstadt-Schauernheim(DE)

(54) Batterien aus Methanol/Luft-Brennstoffzellen hoher Energie- und Leistungsdichte.

(57) Batterie aus Methanol/Luft-Brennstoffzellen, die ihrerseits aus einer Kathode, einer Anode und einer $CO_2$-permeablen Anionenaustauscher-Membran als Elektrolyt aufgebaut sind, bei der mehrere Kathoden und Anoden parallel in einer gemeinsamen Kathodenkammer bzw. Anodenkammer angeordnet sind.

EP 0 269 047 A1

## Batterien aus Methanol/Luft-Brennstoffzellen hoher Energie-und Leistungsdichte

Die vorliegende Erfindung betrifft eine Batterie aus Methanol/Luft-Brennstoffzellen, die ihrerseits aus einer Kathode, einer Anode und einer $CO_2$-permeablen Anionenaustauscher-Membran als Elektrolyt aufgebaut sind, bei der mehrere Kathoden und Anoden parallel in einer gemeinsamen Kathoden-bzw. Anodenkammer angeordnet sind.

In Brennstoffzellen wird ein Brennstoff, in diesem Fall Methanol, an einer Anode elektrochemisch zu Kohlendioxid und Wasser oxidiert, während an einer Kathode Luftsauerstoff zu Hydroxylionen (OH-) reduziert wird. Anode und Kathode sind durch einen Elektrolyten, bei Batterien aus Methanol/Luft-Brennstoffzellen nach dieser Erfindung eine OH-Ionen leitende polymere Anionenaustauscher-Membran, getrennt. Werden Anode und Kathode über einen Verbraucher verbunden, so kommt ein Elektronenfluß von der Anode zur Kathode zustande.

Bis heute sind keine betriebsfähigen Batterien aus Methanol/Luft-Brennstoffzellen bekannt. Nach dem Stand der Technik wird Methanol katalytisch zu Kohlendioxid und Wasserstoff umgesetzt, das Kohlendioxid abgetrennt und der Wasserstoff der eigentlichen Wasserstoff/Luft-Brennstoffzelle zugeführt. Die dabei erzielten Stromdichten liegen um 0,2 bis 0,3 A/cm².

Höhere Stromdichten von 1 A/cm² lassen sich vor allem mit porösen, gasdurchlässigen Elektroden erzielen. Die Gasdurchlässigkeit ist vorteilhaft, da beim Betrieb der Brennstoffzelle Sauerstoff in die Kathode hineindiffundiert und Wasser und Kohlendioxid herausdiffundieren.

Solche Gasdiffusionselektroden werden z.B. von Watanabe et al (J. Electroanal. Chem., 183 (1985), 391-394) beschrieben. Diese Elektroden werden durch Sintern von Ruß zusammen mit Rußteilchen, die mit Katalysator bedeckt sind und gegebenenfalls Polytetrafluorethylen-Teilchen um einen geeigneten Ableiter hergestellt. Die erhaltene Elektrode besteht aus einem porösen Netzwerk, in welchem sich die Katalysatorteilchen unter Ausbildung eines Percolationsnetzwerkes berühren.

Als Percolationsnetzwerk ist dabei zu verstehen, daß eine ständige Verbindung zwischen den Katalysatorteilchen vorhanden ist, d.h. die Katalysatorteilchen sich berühren.

Als Katalysatoren für die Reduktion des Sauerstoffs werden üblicherweise Edelmetalle wie Platin oder Silber, um nur einige zu nennen, verwendet.

Kostengünstigere Kathoden, in denen die Verwendung von teuren Edelmetallen vermieden wird, lassen sich aus speziellen Polymeren, die Übergangsmetalle enthalten, wie sie in der EP-A-154 247 beschrieben werden, herstellen.

Zur Herstellung einer Kathode aus den dort beschriebenen Polymeren verwendet man als Ableiter vorzugsweise ein engmaschiges Drahtnetz, insbesondere aus rostfreiem Stahl oder Kupfer. Die Maschenweiten betragen in der Regel 0,02 bis 0,5 mm, und die freie Fläche macht mindestens 20 % der Gesamtfläche aus. Dieser Ableiter wird dann mit einem unvernetzten Polymeren, wie es in der EP-A-154 247 beschrieben wird, überzogen.

Zur Herstellung der katalytisch wirksamen Masse wird Ruß mit hohen spezifischen Oberflächen (beispielsweise im Bereich von 200 bis 500 m²/g) durch Oxidation in Luft bei ca. 600°C und nachträgliche Behandlung mit siedender Salpetersäure wasserbenetzbar gemacht. Anschließend wird dieser Ruß mit einer verdünnten Lösung des Polymeren getränkt, getrocknet und mit Polytetrafluorethylenpulver gut vermischt und bei 150 bis 200°C um einen entsprechenden Ableiter so verpreßt, daß offene Mikroporen und Kanäle erhalten bleiben.

Als besonders vorteilhaft haben sich poröse Kathoden erwiesen, in denen eine Schicht eines Anionenaustauscher-Polymeren abgeschieden worden ist. Diese Schicht ist im allgemeinen 0,01 bis 1 µm, vorzugsweise 0,05 bis 0,5 µm dick und kann vom Aufbau her der als Festelektrolyt verwendeten Anionenaustauscher-Membran entsprechen oder auch davon verschieden sein.

Als Anionenaustauscher-Membranen können grundsätzlich alle kommerziell erhältlichen Membranen eingesetzt werden, deren Festionengehalt vorzugsweise im Bereich von 0,5 bis 5 Äquivalenten pro kg trockener Membran liegt.

Als Basispolymere für derartige Anionenaustauscher-Membranen eignen sich z.B. Copolymere, die durch Pfropfung von Vinylpyridinen auf Polytetrafluorethylen oder durch Chlormethylierung von mit Divinylbenzol vernetztem Polystyrol und anschließender Quaternisierung mit tertiären Aminen erhältlich sind. Auch Copolymere aus Vinylbenzylchlorid und Divinylbenzol sind geeignet. Zur Erzeugung der zum Anionenaustausch befähigten ionischen Gruppen werden diese Polymere mit entsprechenden Monomeren, z.B. mit Trialkylamin oder multifunktionären Aminen umgesetzt. Geeignete multifunktionelle Amine sind z.B. Diethylentriamin oder Tetraethylenpentamin.

Als Trägerpolymer eignen sich auch Polyvinylchloridfolien, die entsprechend durch Umsetzung mit Aminen modifiziert werden.

Als Anode können ebenfalls die aus dem Stand der Technik an sich bekannten und in der Literatur beschriebenen Anoden für Methanol/Luft-Brennstoffzellen eingesetzt werden. Derzeit sind noch keine Elektroden erhältlich, in denen auf Edelmetalle als Katalysator zur Oxidation des Wasserstoffs ganz verzichtet werden kann.

Als Katalysator eignen sich insbesondere bimetallische Katalysatoren auf Basis Platin/Ruthenium oder Platin/Zinn, die gegenüber reinen Platinkatalysatoren eine höhere Aktivität aufweisen und zu niedrigeren Überspannungen führen.

Verfahren zur Herstellung solcher Anoden sind an sich bekannt und in der Literatur beschrieben (beispielsweise in J. Electroanal. Chem. 179 (1984), 303 oder l.c. 1909 (1986), 311.

Anoden mit besonders hoher Aktivität erhält man, wenn man Ruß mit hohen spezifischen Oberflächen im Bereich von 100 bis 400 m²/g als Träger für den Katalysator verwendet.

Im Gegensatz zu den bekannten Kationenaustauscher-Membranen als Festelektrolyt erfolgt der Stromtransport in den beschriebenen Methanol/Luft-Brennstoffzellen durch Wanderung der Hydroxyl-Ionen, die an der Kathode gebildet werden, zur Anode. Die Hydroxyl-Ionen nehmen bei ihrer Wanderung eine Solvathülle aus Wassermolekülen in den Anodenraum mit. Auf der Kathodenseite wird das Wasser ständig mit dem Luftstrom, der an der Kathode vorbeigeführt wird, entfernt. Dies hat zur Folge, daß von der Anodenseite zur Kathodenseite ein Konzentrationsgradient an Wasser aufgebaut wird, der dadurch ausgeglichen wird, daß Wasser von der Anodenseite zur Kathodenseite wandert. Dadurch wird der Verlust auf der Kathodenseite ausgeglichen und man erhält einen gleichmäßigen Wassergehalt auf Kathoden-und Anodenseite, wodurch zusätzliche Maßnahmen zur Befeuchtung der Membran auf einer Elektrodenseite überflüssig werden.

Die Hydrogencarbonation und/oder an der Anode gebildetes $CO_2$ wandern aufgrund des Konzentrationsgefälles und des elektrostatischen Felds innerhalb der Anionenaustauscher-Membran von der Anode zur Kathode, wo die Hydrogencarbonation infolge des dort vorliegenden geringen Kohlendioxid-Partialdrucks zu Hydroxyl-Ionen und Kohlendioxid dissoziieren.

Das Kohlendioxid wird gasförmig mit dem an der Kathode vorbeigeführten Luftstrom entfernt.

Zur optimalen Ausnutzung des Volumens einer Brennstoffzelle gehört es zum Stand der Technik, die Kammern für Luft und Brennstoff derart auszunutzen, daß sich je ein Kathoden-und Anodenpaar gegenüberstehen (s. Prospects Of Fuel Cells With Alkaline, Solid-Polymer And Superacid Electrolytes As Power Sources For Electric Vehicles; S. Srinivasan, Seminar on "Electric and Hybrid Vehicle Advances Technology", Pasadena, Calif., Dec 8-9, 1980).

Mit der Entwicklung neuer Brennstoffzellen mit hoher Energie-und Leistungsdichte treten Probleme auf, die bisher in der Technologie der Brennstoffzellen keine besonders hohe Priorität hatten. Als Folge der Erhöhung der Stromdichte von bisher um 0,2 A/cm² auf ca. 1 A/cm² müssen neue konstruktive Maßnahmen zur möglichst verlustarmen Ableitung der Ströme aus den Elektroden getroffen werden. Da pro Zelle nur eine Spannung von 1 V abgegeben wird, ist eine Batterie aus Brennstoffzellen dadurch charakterisiert, daß sie bei niedriger Spannung, je nach Zellenzahl, eine hohe Stromstärke abgibt. Dies bedingt hohe Leiterquerschnitte, um den Spannungsabfall niedrig zu halten. Aus Gründen der Verlegbarkeit der Leiter und weil hohe Ströme bei niedrigen Spannungen für die meisten Verbraucher ungünstig sind und die Regelbarkeit ebenfalls Schwierigkeiten bereitet, sollte eine Brennstoffzellenbatterie niedrige Ströme bei hohen Spannungen abgeben. Vorteilhafte Arbeitsspannungen sind solche, die der Spitzenspannung einer genormten effektiven Wechselspannung entsprechen.

So wäre es beispielsweise wünschenswert, eine Brennstoffzellenbatterie mit einer Ausgangsspannung von 310-320 V zu versehen, um diese Gleichspannung über eine Halbleiterschaltung in eine Wechselspannung von 220 V umsetzen zu können, wobei ein teurer und schwerer Transformator überflüssig wäre.

Zur Erzielung hoher Leistungs-und Energiedichten sollte das Volumen optimal ausgenutzt werden, und als Grundlage eines akzeptablen Preises sollten Brennstoffzellenbatterien aus nur wenig verschiedenen in Massenfertigungsverfahren herstellbaren Einzelteilen bestehen.

Es war daher Aufgabe der Erfindung, eine Batterie bestehend aus Methanol/Luft-Brennstoffzellen so zu gestalten, daß die ohmschen Verluste möglichst niedrig sind, die Gesamtspannung hoch ist aund die benötigten Einzelteile wirtschaftlich in Massenfertigungsverfahren herstellbar sind.

Die Lösung dieser Aufgabe erfolgt erfindungsgemäß durch eine Batterie aus Methanol/Luft-Brennstoffzellen der eingangs genannten Art. Weitere Ausgestaltungen der Erfindung sind Gegenstand der Unteransprüche.

Als wichtigstes charakteristisches Merkmal der Erfindung wird die Elektrodenfläche in einer Kammer in einzelne, individuelle Elektroden unterteilt, um eine Brennstoffzellenbatterie mit hoher Spannung zu erhalten. Alle Zellen werden in Serie geschaltet. Durch die Unterteilung wird nahezu keine aktive Elektrodenfläche verschenkt, weil der Rahmen der Einzelelektroden im Fall einer großflächigen Elektrode ebenfalls als Stromableiter hätte vorhanden sein müssen. Mit der Unterteilung in mehrere Einzelelektroden innerhalb einer Kammner wird auch eine optimale Geometrie zur Stromableitung erzielt. Die ohmschen Verluste sind nämlich bei langen, schmalen Elektroden niedriger als bei quadratischen Elektroden gleicher Fläche. Die einzelnen Elektroden sind durch schmale isolierende Stege voneinander getrennt.

Zur Vermeidung hoher Druckverluste der strömenden Luft wird die Tiefe der Batterien begrenzt und das notwendige Volumen aus einer erhöhten Höhe und Länge erhalten. Höhe und Länge sollten zur optimalen Ausnutzung eines raumsparenden Axialgebläses für die Luftzufuhr möglichst gleich sein. In einer erfindungsgemäßen, einfachen Konstruktion verläuft die Luftströmung in den Kathodenkammern quer zur Methanol-Strömung in den Anodenkammern.

Das Methanol wird jeder Anodenkammer über eine Zulaufbohrung getrennt zugeführt. Damit ergibt sich die Möglichkeit, im Fall des Versagens, z.B. durch Undichtigkeit eine Kammer, zu entleeren und die nun funtkionslosen Elektroden zu überbrücken. In diesem Fall wird die Leistung der Brennstoffzellenbatterie nur geringfügig reduziert, und es braucht nicht die gesamte Batterie ersetzt werden.

Auch das Nachaußenlegen aller Anschlußfahnen der Elektroden und ihre Verschaltung außerhalb der Kammern ist von Vorteil. Damit gelingt es, einzelne versagende Elektroden zu überbrücken und damit die Brennstoffzellenbatterie in Betrieb zu halten.

Es ist aber auch möglich, die Serienschaltung von Einzelelektroden innerhalb einer Kammer über die Längsstege der Ableiterrahmen durchzuführen, wobei nur die Anschlußfahne der jeweils äußersten rechten und linken Elektrode zur weiteren Verschaltung nach außen geführt werden.

In den Zeichnungen ist ein Ausführungsbeispiel der Erfindung schematisch dargestellt und im folgenden näher erläutert:

Sie zeigen

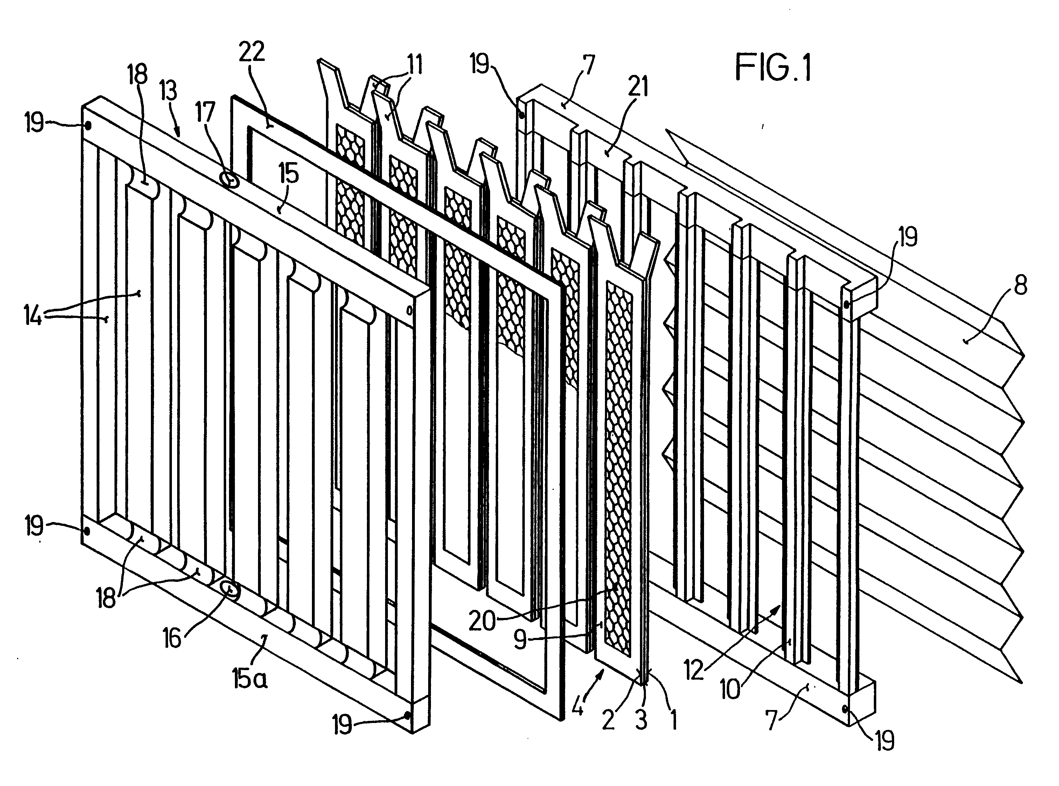

Figur 1: Ausschnitt aus der Brennstoffzellenbatterie

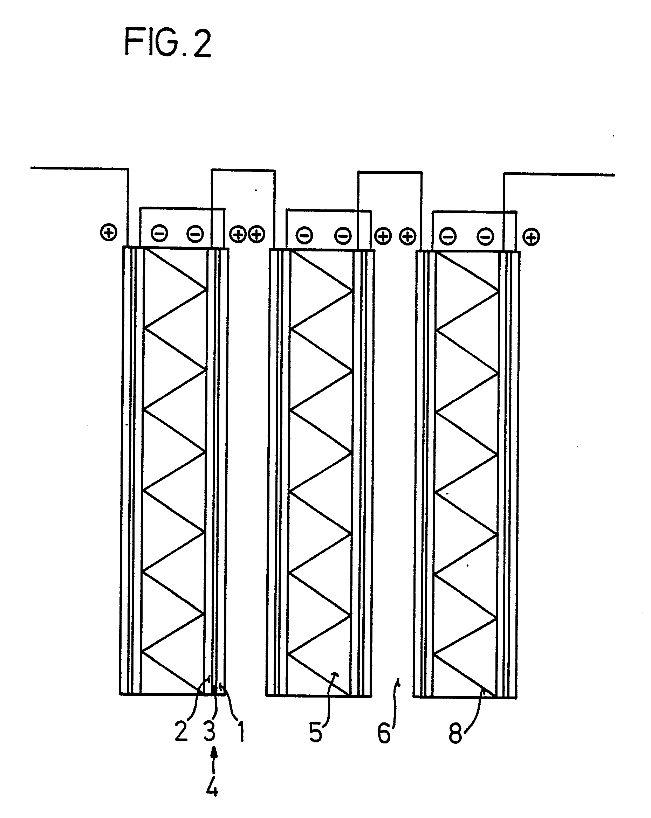

Figur 2: Schema der Elektroden-und Kammeranordnung

Figur 3: Serienschaltung von Einzelelektroden innerhalb einer Kammer

Die erfindungsgemäße Batterie aus Methanol/Luft-Brennstoffzellen besteht aus einer periodischen Abfolge von Abstandshalten 7, 13, welche die Kathodenkammern 5 und die Anodenkammern 6 aufbauen, einer Luftleitvorrichtung 8 in der Kathodenkammer 5 sowie vorgefertigten Elektrodeneinheiten 4, den eigentlichen Brennstoffzellen, die aus Anode 1, Kathode 2 und der Anionenaustauscher-Membran 3 bestehen.

Die Verschaltung der Einzelzellen erfolgt in Serie. Die Luftströmung durch die Kathodenkammern 5 erfolgt senkrecht zur Methanol-Zufuhr, womit ein konstruktiver einfach zu beherrschender Massefluß erhalten wird.

Die erfindungsgemäßen Brennstoffzellenbatterien werden aus zwei verschiedenartigen Abstandshaltern 7. 13 aufgebaut, die mehrere Funktionen erfüllen. Es handelt sich dabei um Spritzgußteile aus gegenüber Methanol beständigen Kunststoffen, wie Polyethylen hoher Dichte oder Polypropylen. Zur Erzielung erhöhter Steifigkeit und hoher Maßhaltigkeit können diese Kunststoffe noch mit mineralischedn Füllstoffen wie Talkum, Kreide oder Wollastonit gefüllt sein.

Die Kathodenkammern 5 werden aus zwei spiegelbildlich zueinander gekehrten Abstandshaltern 7 aufgebaut, die gleichzeitig die Luftströmung führen, die Auflage-und Dichtflächen für die Elektrodeneinheiten und die isolierenden Stege 10 zur Trennung der Elektroden 4 enthalten.

Zur Führung des Luftstroms und zur Aufnahme der auf die Elektroden 4 aufgebrachten Anpreßkraft enthalten die Kathodenkammern 5 ziehamonikaartige Lamellen 8, die als Spritzgußteil aus steifen thermoplatischen Kunststoffen wie Polyamid 6, Polyamid 6.6, Polyethylenterephthalat, Polybutylenterephthalat oder Polypropylen bestehen können und zur Erhöhung der Steifigkeit gegebenenfalls verstärkend wirkende Füllstoffe enthalten können.

Die Elektrodeneinheiten 4 werden mit der Kathodenseite auf den Abstandshaltern 7 gesetzt. Dabei dient der Ableiterrahmen 9 als Dichtfläche. Als Dichtmassse kann ein Elastomer dienen, das als dünne Schicht auf den Ableiterrahmen 9 gedruckt ist und dort vulkanisiert wurde. Der oberere Quersteg enthält jeweils Aussparungen 21 zur Durchführung der Anschlußfahnen 11, die nach Fertigstellung der Batterie miteinander verschweißt werden.

Die Höhe des Isolierstegs 10 ist geringer als die Gesamtdicke der Elektrodeneinheit 4, so daß die Elektroden über Längsstege 14 in der Anodenkammer 6 jeweils über die gesamte Länge an die Dichtfläche gedrückt wird. Dazu sind die Längsstege 14 des Abstandhalters 13 der Anodenkammer 6 jeweils so breit ausgeführt, daß sie jeweils zwei benachbarte Ableiterrahmen 9 andrücken.

Zur optimalen Ausnutzung des Volumens werden die Kathodenkammern 5 von jeweils zwei Kathoden 2 aufeinanderfolgenden Zellen und die Anodenkammern 6 von jeweils zwei Anoden 1 aufeinanderfolgender Zellen begrenzt. Damit werden die Kammern doppelt ausgenutzt und das benötigte Volumen praktisch halbiert.

Als Elektrodenableiter 20 können vernickelte Kupferdrahtnetze verwendet werden, die mit einem Kupferrahmen verschweißt sind. Mit Massenfertigungsverfahren besser herzustellen sind dagegen Lochbleche, die in ein bis zwei Schritten durch spanlose Verformung und Ausstanzen aus Kupferblech herzustellen sind. Dabei beträgt der Lochdurchmesser um 0,5 mm Die Löcher können neben kreisförmigen Querschnitten vor allem auch sechseckige, wabenförmige Querschnitte aufweisen 20. Die Löcher können nicht nur durch Stanzen, sondern auch durch Laserstrahlung erzeugt werden. Als weiteres Verfahren zur Herstellung regelmäßiger Strukturen mit Lochdurchmessern von 20 bis 800 $\mu$m und Wandstärken von 1 bis 500 $\mu$m können die Elektroden mittels eines Mikrostrukturierungsverfahrens hergestellt werden. Dazu wird durch Röntgentiefenlithografie mit Synchrotonstrahlung in einer Kunststoffolie eine Resiststruktur erzeugt. Die Bestrahlung wird durch eine entsprechende Maske vorgenommen. Die bestrahlten Stellen in der Folie werden ausgelöst und die freigelegten Strukturen galvanisch mit Nickel aufgefüllt. Die so hergestellte Metallstruktur wird als Formeinsatz für die Massenfertigung von Kunststoffstrukturen im Spritzgußverfahren eingesetzt. Durch Galvanoformung wird aus der Kunststoffstruktur die gewünschte Nickelelektrode hergestellt.

Etwa die halbe Stirnseitenlänge des Ableiterrahmens wird als Anschlußfahne 11 verwendet.

Nach dem Füllen der Elektroden mit dem jeweiligen Katalysator und dessen Aktivierung werden jeweils Anode und Kathode über einen Polymerelektrolyten miteinander verbunden, wobei der Polymerelektrolyt 3 auch zur elektrischen Trennung von Anode und Kathode dienen kann. Zusätzlich können die einander zugekehrten Flächen der Ableiterrahmen von Kathode 2 und Anode 1 durch eine Kunststoffolie von 20 bis 100 $\mu$m Dicke voneinander isoliert sein. Dieser Isolator kann in Form eines Metallschmelzklebers aufgebracht sein.

Die Abstandshalter 13, welche die Anodenkammern 6 bilden, enthalten im unteren Quersteg 15 eine zentrale Bohrung 16 für die Zuführung des Methanols, am oberen Quersteg 15a eine verschraubbare Entlüftungsöffnung 17, die zur Entfernung von Luftblasen bei der erstmaligen Befüllung dient. Die zum Anpressen der Elektroden dienenden Längsstege 14 weisen Einkerbungen 18 auf, die für die Verteilung des Methanols zwischen die einzelnen Stege 14 notwendig sind.

Die Führung der Abstandshalter 7, 13 und die Erzeugung der Andruckkräfte werden durch Bolzen bewerkstelligt, die durch Bohrungen 19 in den äußeren Stege geführt werden. Die Anodenkammern 6 werden durch Einlegen von dünnen Elastomerdichtungen 22 zwischen die äußeren Stege nach außen abgedichtet.

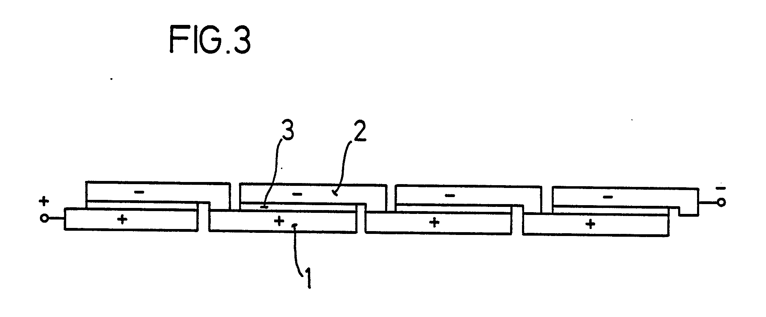

Falls die Anoden und Kathoden innerhalb einer Kammer in Serie verschaltet werden sollen (Fig. 3), werden jeweils die Kombination von Anoden-und Kathodenableiter aus Kupferblech als ein Teil 1, 2 hergestellt. Nach dem Vernickeln wird zuerst ein Ableiterteil, z.B. die Kathode 2, mit aktiver Masse gefüllt und die Masse aktiviert. Sodann wird der zweite Ableiter mit der anderen Elektrodenmasse gefüllt und aktiviert. Die einteiligen Kombinationen aus Anode und Kathode werden sodann über das Anionenaustauscher-Polymere 3 in der gezeigten Weise miteinander verbunden.

Beispielhaft sind die wesentlichsten Maße einer Brennstoffzellenbatterie mit ca. 25 kW Leistung aufgeführt (ohne Gebläse):

Die aktive Fläche einer Elektrode beträgt ca. 80 cm bei einer Stromdichte von 1 A/cm². Mit 324 Einzelzellen und rund 1 V Arbeitsspannung beträgt die Gesamtspannung ca. 320 V. Die Batterie besteht aus 27 doppelseitig wirksamen Kammern und 6 Einzelzellen pro Kammer. Die Elektroden sind jeweils 1 mm stark und inklusive Ableiterrahmen 30 mm breit und 410 mm lang. Die Ableiterrahmen aus Kupfer sind 5 mm breit. Der Energieverlust infolge ohmscher Verluste über den Ableiterrahmen beträgt knapp 3 %. Die Breite der die Ableiter isolierenden Stege beträgt 2 mm, ihre Stärke 1,5 mm. Die lichte Weite der Anodenkammern beträgt 3 mm, die der Kathodenkammern inklusive eingelegter Elektrodeneinheiten (2 mm stark) 14 mm. Die Höhe der Batterie beträgt 460 mm, die Länge ebenfalls ca. 460 mm, die Tiefe 250 mm.

Damit beträgt das Volumen der Brennstoffzellenbatterie ca. 53 Liter, das einem Leistungsvolumen von ca. 0,5 kW/lt entspricht.

**Ansprüche**

1. Batterie aus Methanol/Luft-Brennstoffzellen, die ihrerseits aus einer Kathode (2), einer Anode (1) und einer $CO_2$-permeablen Anionenaustauscher-Membran (3) als Elektrolyt aufgebaut sind, bei der mehrere Kathoden (2) und Anoden (1) parallel in einer gemeinsamen Kathodenkammer (5) bzw. Anodenkammer (6) angeordnet sind.

2. Batterie nach Anspruch 1, dadurch gekennzeichnet, daß die Kathodenkammern (5) von jeweils zwei Kathoden (2) aufeinanderfolgender Methanol/Luft-Brennstoffzellen (4) und die Anodenkammern (6) von jeweils zwei Anoden (1) aufeinanderfolgender Methanol/Luft-Brennstoffzellen (4) begrenzt sind.

3. Batterie nach Anspruch 1 und 2, dadurch gekennzeichnet, daß die Ableiter (9) der Kathoden (2) und der Anoden (1) eine Wabenstruktur (20) aufweisen.

4. Batterie nach Anspruch 1 bis 3, dadurch gekennzeichnet, daß die Ableiter (9) aus Nickel bestehen.

FIG.1

# FIG.2

FIG.3

**Europäisches Patentamt**

# EUROPÄISCHER RECHERCHENBERICHT

Nummer der Anmeldung

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| | **EINSCHLÄGIGE DOKUMENTE** | | EP 87117214.4 |
| A | CH - A5 - 617 293 (BROWN BOVERI)<br><br>* Zusammenfassung; Fig. 1 *<br><br>-- | 1,2 | H 01 M 8/24<br><br>H 01 M 8/02<br><br>H 01 M 4/94<br><br>H 01 M 2/14 |
| A | CHEMICAL ABSTRACTS, Band 101, Nr. 20, 12. November 1984, Columbus, Ohio, USA<br><br>HITACHI LTD. "Metanol-air fuel cell with acid electrolyte"<br>Seite 205, Spalte 2, Zusammenfassung Nr. 174 723g<br><br>& Jpn. Kokai Tokkyo Koho<br>JP 59 117 074<br><br>-- | 1 | |
| D,A | EP - A2 - 0 154 247 (BASF)<br><br>* Ansprüche 1,6 *<br><br>---- | 1 | |
| | | | RECHERCHIERTE SACHGEBIETE (Int. Cl.4)<br><br>H 01 M |

Der vorliegende Recherchenbericht wurde für alle Patentansprüche erstellt.

| Recherchenort | Abschlußdatum der Recherche | Prüfer |
|---|---|---|
| WIEN | 01-03-1988 | LUX |